# EUROPÄISCHE PATENTSCHRIFT

(11) **EP 1 386 536 B1**
(45) Veröffentlichungstag und Bekanntmachung des Hinweises auf die Patenterteilung: **01.03.2006**
(21) Anmeldenummer: 03015932.1
(22) Anmeldetag: 12.07.2003
(51) Int. Cl.: A01G 25/16

(54) **Versenkbarer Schacht für eine Bewässerungsanlage**
Buriable shaft for a watering system
Puits enfouissable pour un système d'irrigation

(30) Priorität: 31.07.2002 DE 10235869
(43) Veröffentlichungstag der Anmeldung: 04.02.2004
(73) Patentinhaber: GARDENA Manufacturing GmbH, 89079 Ulm (DE)
(72) Erfinder: Schiedt, Christoph, 88483 Burgrieden (DE)
(74) Vertreter: Patentanwälte Ruff, Wilhelm, Beier, Dauster & Partner

(56) Entgegenhaltungen:
- US-A- 5 908 157
- US-A1- 2001 045 230

## Beschreibung

Die Erfindung betrifft einen versenkbaren Schacht für eine Bewässerungsanlage, der in einem Schachtgehäuse mit Zu- und Abführleitungen für die Wasserversorgung sowie mit diesen zugeordneten elektrisch betätigbaren Steuergeräten, insbesondere Magnetventilen und mit elektrischen Anschlussleitungen für diese Steuergeräte versehen ist, wobei eine elektrische Verteilerleiste vorgesehen ist, die mit den A dem eines in das Schachtgehäuse eingeführten Kabels verbunden und mit den Anschlussleitungen zu den Steuergeräten belegbar ist und die oberhalb einer Wassersammelleitung angeordnet ist, die als gemeinsame Zuführleitung für alle Abführleitungen dient und einen externen Anschluss aufweist.

Versenkbare Schachtgehäuse dieser Art sind bekannt. Sie sind in der Regel so ausgebildet, dass bei mehreren Abführleitungen, die beispielsweise jeweils mit einem Magnetventil versehen und durch diese zu öffnen oder zu schließen sind, für jede der Abführleitungen auch eine Zuführleitung in das Gehäuse hereingeführt wird, die extern an entsprechende Rohranschlüsse gelegt ist. Ein versenkbarer Schacht dieser Art ist daher nur in aufwendiger Weise wasserseitig anzuschließen.

Das gleiche gilt für den Fall, dass eine elektrische Verdrahtung der Magnetventile notwendig ist, wobei wegen der Vielzahl von im Schacht geführten Zu- und Abführleitungen in der Regel auch nur wenig Platz für die Kabelverlegung bleibt.

Aus der US-A-32 41 767 ist eine Bewässerungsanlage bekannt, bei der über eine gemeinsame Zuleitung mehrere Abführleitungen versorgt werden können, die in bestimmten Zeitabständen nacheinander mit Wasser versorgt werden. Ein entsprechender Schaltmechanismus mechanischer Art, der die entsprechenden Ventile öffnet, ist zu diesem Zweck vorgesehen. Einrichtungen dieser Art sind relativ kompliziert aufgebaut.

Die US 2001/0045230 beschreibt eine Verteileranlage zur Gartenbewässerung, die in einem im Boden versenkbaren Gehäuse untergebracht ist und eine Wasserzufuhrleitung sowie mehrere damit verbundene Wasserabfuhrleitungen aufweist. Für eine Steuerung der Wasserabfuhrleitungen sind Magnetventile vorgesehen, die über elektrische Steuerleitungen ansteuerbar sind. Die Steuerleitungen sind ortsfest an Wänden des Gehäuses befestigt und mit einer Verteilerleiste elektrisch verbunden, die ihrerseits mit einem mehradrigen Steuerkabel verbunden ist, das durch eine Wand des Gehäuses nach außen geführt ist. Die Verteilerleiste ist oberhalb einer Wasserzufuhrleitung angeordnet, die für eine gemeinsame Versorgung der Wasserabfuhrleitungen vorgesehen ist und geradlinig durch eine Öffnung in der Wand des Gehäuses geführt ist. Als Gehäuse kommt ein mit Bohrungen versehenes Standartgehäuse zur Anwendung.

Die US 5,908,157 zeigt eine Steuereinrichtung zur Gartenbewässerung, die in einem Gehäuse untergebracht ist und eine Wasserzufuhrleitung sowie mehrere damit verbundene Wasserabfuhrleitungen aufweist. Die Wasserzufuhrleitung ist durch eine Öffnung in einer Wand des Gehäuses geführt und orthogonal zur Wand ausgerichtet. Eine Steuereinrichtung zur Ansteuerung von Magnetventilen ist in einem Deckelbereich des Gehäuses und damit oberhalb der Wasserzufuhrleitung angebracht und Ist mit den Magnetventilen über Steuerleitungen verbunden. Die Magnetventile werden zur Ansteuerung von Wasserabfuhrleitungen, die mit der Wasserzufuhrleitung verbunden sind, eingeseizt. Als Gehäuse wird eine rechteckige Schachtel mit einem mittels eines Scharniers befestigten Deckel eingesetzt.

Der Erfindung liegt die Aufgabe zugrunde, einen Schacht der eingangs genannten Art so auszugestalten, dass eine wesentlich vereinfachte Herstellung ermöglicht ist.

Zur Lösung dieser Aufgabe wird die Wassersammelleitung außerhalb des Schachtgehäuses an dessen Wand geführt und die Wand ist mit einer Vertiefung für die Sammelleitung versehen. Möglich und vorteilhaft ist es, die Wassersammelleitung außerhalb des Schachtgehäuses an dessen Wand zu führen, wobei In der entsprechenden Schachtwand eine nach innen gerichtete Einbuchtung vorgesehen sein kann. Die so als separates Rohrstück ausgebildete Wassersammelleitung bringt den Vorteil mit sich, dass die Sammelleitung mit ihren Abzweigungen einerseits und das Schachtgehäuse andererseits sehr einfach zu fertigen sind. Die Sammelleitung kann mit ihren mehreren Abzweigungen auch unabhängig vom Schacht als Verteiler eines erdverlegten Leitungssystems benutzt werden und es ist möglich, jederzeit einen Wechsel zwischen den verschiedenen Nutzungsarten vorzunehmen. An die Sammelleitung, die beispielsweise mit drei Abzweigungen versehen ist, kann aber auch nur ein kleinerer Schacht mit nur einer oder zwei Abzweigungen und entsprechenden Ventilen angeschlossen werden, wobei dann die freie Abzweigung entweder für ein unterirdisches Rohrsystem verwendet oder auch stillgelegt werden kann. Schließlich bietet diese Variante auch den Vorteil, dass dann, wenn ein Frostschaden auftritt, weil beispielsweise der Benutzer im Winter versäumt hat, die Leitungen zu entwässern, nur das Sammelleitungsstück erneuert zu werden braucht, während das Schachtgehäuse selbst ohne Schaden wleder verwendbar ist.

Die in dem Schachtgehäuse vorgesehene elektrische Verteilerleiste, die mit den Adern eines in das Schachtgehäuse eingeführten Kabels verbunden und mit den Anschlussleitungen zu den Steuergeräten belegbar ist, ermöglicht eine übersichtliche und einfache Verdrahtung, weil hier der elektrische Anschluss der Verteilerleiste bereits werkseitig vorbereitet sein kann, so dass vor Ort nur noch die Anschlussleitungen zu den entsprechenden Steuergeräten, insbesondere zu den Magnetventilen der einzelnen Abführleitungen gelegt werden müssen. Was die Wasseranschlüsse betrifft, so wird als Zuführleitung eine gemeinsame Wassersammelleitung mit einem externen Anschluss vorgesehen ist, von der alle Abführleitungen abzweigen. Diese Ausgestaltung macht es daher nicht mehr notwendig, dass alle Abführleitungen getrennt verrohrt werden müssen. Es genügt der externe Anschluss der Wassersammelleitung, so dass dann auch alle von dieser abzweigende weiterführenden Wasserleitungen angeschlossen sind.

Die elektrische Verteilerleiste kann oberhalb der als gemeinsamen Zuführleitung dienenden Wassersammelleitung angeordnet werden, so dass eine besonders übersichtliche und vorteilhafte Ausgestaltung eines Schachtes erreicht ist, in dem Steuergeräte für die Wasseranschlüsse vorgesehen sind.

Die Wassersammelleitung kann als eine parallel zu und angrenzend an eine Gehäusewand des Schachtes verlaufende Versorgungsleiste ausgebildet sein, die einstückig in das Gehäuse des Schachtes integriert werden kann, so dass Schacht einschließlich Wassersammelleitung in einfacher Weise, beispielsweise aus Kunststoff herstellbar sind. Natürlich ist es auch möglich, die Wassersammelleitung aus einem anderen, dem Wasserdruck und chemischen Einflüssen langfristig standhaltenden Material herzustellen und dann im Schachtgehäuse, das mehrteilig auszubilden wäre, zu integrieren.

Die Abführleitungen gehen zweckmäßig alle rechtwinklig von der Wassersammelleitung und im wesentlichen horizontal ab, so dass im Schachtgehäuse eine übersichtliche Anordnung der Verteilleitungen vorliegt. Dabei wird es möglich, die Wassersammelleitung über wahlweise wählbare externe Anschlüsse an die Wasserversorgung anzulegen. So können beispielsweise Anschlüsse an beiden Enden der als Versorgungsleiste ausgebildeten Wassersammelleitung und/oder auch in der Gehäusewand vorgesehen sein, an welche die Wassersammelleitung in der Form der Versorgungsleiste angrenzt.

In Weiterbildung der Erfindung kann die elektrische Verteilerleiste die senkrecht nach oben gezogenen Projektionsgrenzlinien der als Versorgungsleiste ausgebildeten Wassersammelleitung nicht überragen, so dass das Raumangebot innerhalb des Schachtgehäuses und die Möglichkeit eines Zugriffes von oben nicht beschränkt wird. Die Abführleitungen und deren Steuergeräte bleiben frei von oben zugänglich.

In Weiterbildung der Erfindung kann die Verteilerleiste durch einen übergestülpten Topfverschluss nach oben abgedeckt sein, der luft- und wasserdicht ausgebildet ist. Diese Ausgestaltung gibt die Gewähr dafür, dass selbst In dem Fall, dass sich im Schacht trotz der Anordnung einer am Boden vorgesehenen Ablauföffnung Wasser ansammelt und der Wasserspiegel ansteigt, die im Topf befindliche Luft ein Eindringen von Wasser verhindert, so dass die Verteilerleiste durch die Anordnung des Topfes dauerhaft gegen Feuchtigkeit und Wasserberührung geschützt ist.

Der Topfverschluss kann in Weiterbildung der Erfindung mit seinem unteren Rand auf Leisten aufliegen, welche die Wassersammelleitung seitlich nach oben überragen. Dabei kann der untere Topfrand zumindest abschnittsweise mit einer elastischen Klemmleiste versehen sein, die insbesondere als Klemmmittel für die von der Verteilerleiste abgezogenen elektrischen Anschlussleitungen dienen kann. Eine Abdichtung des unteren Topfrandes gegen das Schachtgehäuse ist nicht erforderlich.

Das elektrische Anschlusskabel schließlich kann in an sich bekannter Weise über Dichttüllen in das Schachtgehäuse und zweckmäßig auch noch in den Raum unterhalb des Topfes geführt werden, was sinnvollerweise nicht durch den Topf, sondern im Bereich der festen, die Wassersammelleitung überragenden Leisten erfolgt, weil dann der elektrische Anschluss der Verteilerleiste unabhängig von dem abnehmbaren Topf bereits werksseitig erfolgen kann.

In besonders vorteilhafter Weise kann dann, wenn, wie vorher erwähnt, die Sammelleitung als gesondertes Rohrstück ausgebildet und außerhalb des Schachtgehäuses angeordnet ist, vorgesehen werden, dass dieses Rohrstück mit seinen Abzweiganschlüssen durch Öffnungen der Schachtwand hindurchgeführt und mit diesen Anschlüssen auch an der Wand befestigt wird. Dies kann dann auf einfache Weise durch Steckverschlüsse geschehen, so dass die Montage sehr einfach ist. Dieses separate Rohrstück kann schließlich auch noch mit einer zusätzlichen Abzweigung in der Form eines Anschlusses versehen sein, der in das Schachtinnere hereinragt, im Betrieb durch einen Blindstopfen verschlossen ist und lediglich zur Entwässerung des Wasserversorgungsnetzes in das Schachtinnere herein dient. Es ist auf diese Weise möglich, vor Einsetzen von Bodenfrost das Leitungssystem durch Auslaufen des darin enthaltenen Wassers in den Schacht zu entwässern. Da die Schachtkonstruktion so ausgeführt ist, dass ein Ablauf nach unten möglich ist und weil die im Schacht enthaltenen elektrischen Bestandteile gegen ansteigendes Wasser isoliert sind, kann das Wasser aus dem Schacht durch die Auslauföffnung am tiefsten Punkt des Schachtbodens in das Erdreich versickern. Ein Schaden an den elektrischen Teilen tritt nicht auf.

Die Erfindung ist anhand von Ausführungsbeispielen in der Zeichnung gezeigt und wird im folgenden beschrieben. Es zeigen:
- Fig. 1: eine Seitenansicht eines versenkbaren Schachtes nach der Erfindung in einer ersten Ausführungsform,
- Fig. 2: die Darstellung des Schachtes der Fig. 1 in Richtung der Schnittlinie II-II der Fig. 1 gesehen,
- Fig. 3: die Schnittdarstellung des Schachtes in Richtung der Schnittlinie III-III der Fig. 2,
- Fig. 4: einen Schnitt ähnlich Fig. 3, jedoch durch eine zweite Ausführungsform eines versenkbaren Schachtes nach der Erfindung,
- Fig. 5: die Darstellung des Schachtes der Fig. 4, jedoch ohne Abdeckung und in Richtung des Pfeiles V gesehen,
- Fig. 6: den Schnitt durch das Schachtgehäuse längs der Schnittlinie VI-VI der Fig. 5, jedoch ohne die eingebauten Magnetventile und ohne Verteilerleiste,
- Fig. 7: die Ansicht des bei der Ausführungsform der Fig. 4 und 5 vorgesehenen separaten und als Wassersammelleitung verwendeten Rohrstückes und
- Fig. 8: die Draufsicht auf das Rohrstück der Fig. 7 in Richtung des Pfeiles VIII.

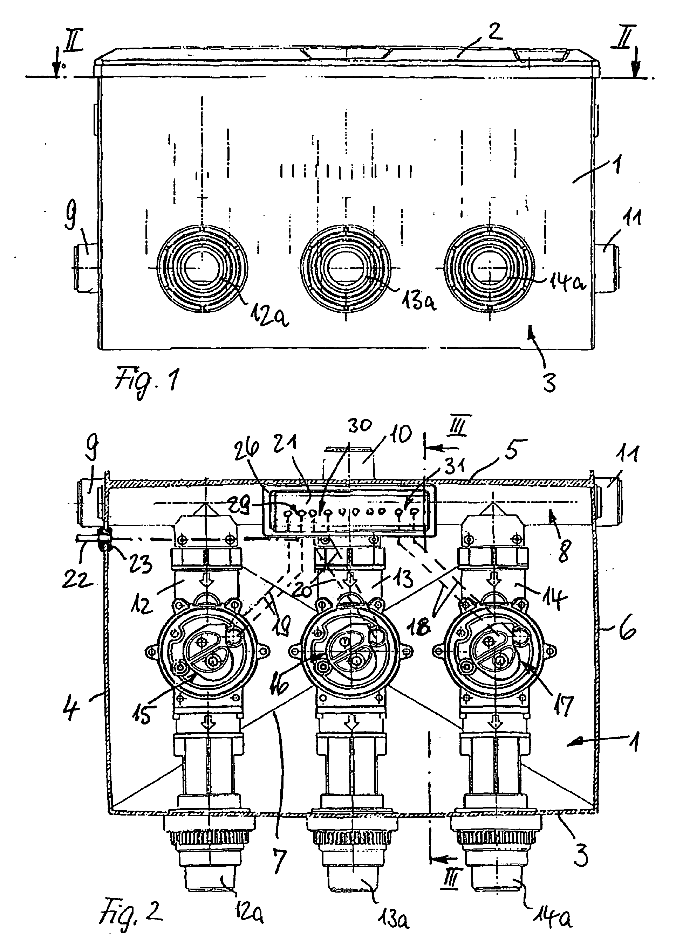

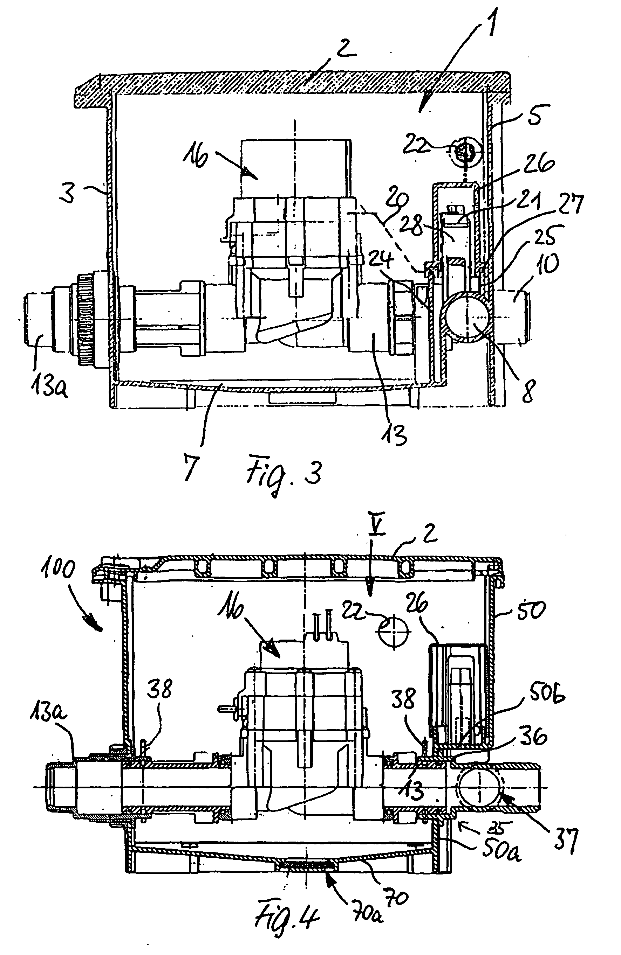

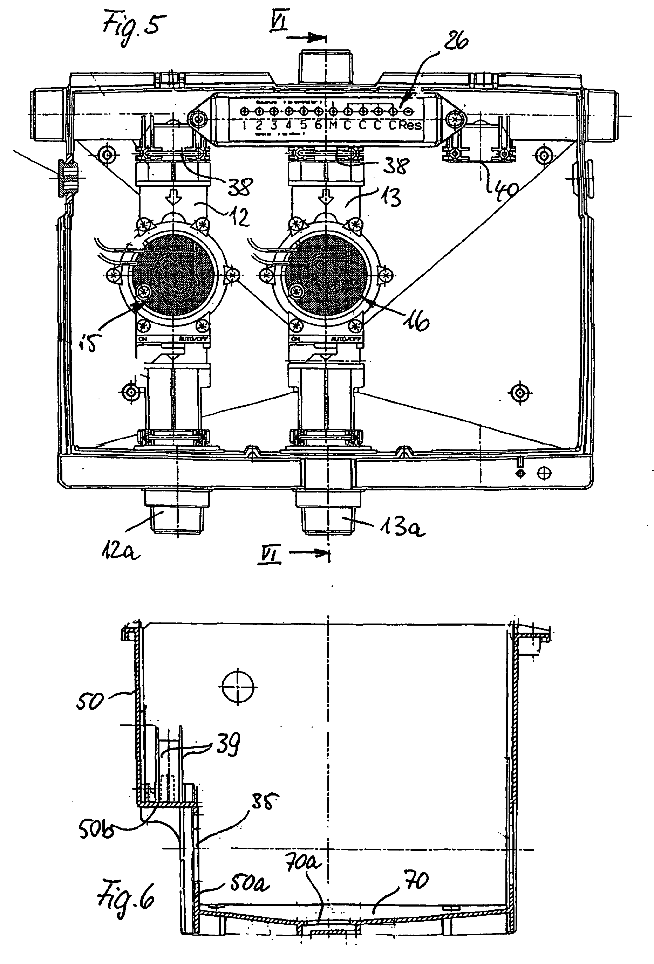

In den Fig. 1 bis 3 ist ein Schachtgehäuse 1 in Kastenform gezeigt, das durch einen abnehmbaren Deckel 2 oben abgeschlossen werden kann. Das Schachtgehäuse 1 ist im Boden versenkbar und besitzt vertikal verlaufende Wände 3, 4, 5 und 6, die von gegenüberliegenden Seitenwänden 4 und 6 und gegenüberliegenden Vorder- und Rückwänden 3, 5 gebildet sind. Das Gehäuse weist im skizzierten Beispiel einen annähernd rechteckigen Grundriss auf, wobei aber die Wände auch leicht gewölbt (bombiert) sein können. Das Gehäuse besitzt unten einen etwa zur Mitte hin abfallenden Boden 7, der eine mittige Abflussöffnung aufweist, durch die Wasser, das in unerwünschter Weise in das Innere des Schachtgehäuses 1 eindringt, nach unten ablaufen kann. Wie aus den Fig. 2 und 3 hervorgeht, ist die Rückwand 5 mit einer unmittelbar an sie angrenzenden und parallel zu ihr verlaufenden Wassersammelleitung 8 ausgerüstet, die nach dem Einbau des Schachtgehäuses 1, horizontal verläuft und beim Ausführungsbeispiel mit drei externen Anschlüssen 9, 10 und 11 versehen ist. Diese Anschlüsse sind wahlweise für die Wasserversorgung der Wassersammelleitung 8 vorgesehen. Bei Abschluss des Anschlusses 10 und Öffnen der Anschlüsse 9 und 11 ist die Wassersammelleitung 8 aber auch als eine Durchflussleitung zu verwenden.

Von der Wassersammelleitung 8 aus zweigen, ebenfalls in einer Horizontalebene nach dem Einbau, Abführleitungen 12, 13 und 14 senkrecht ab, die alle mit der Wassersammelleitung 8 verbunden sind und durch die Vorderwand 3 des Schachtgehäuses 1 nach außen geführt sind. Ihre äußeren Anschlussstutzen 12a, 13a und 14a können mit weiterführenden Leitungen verbunden werden, über die verschiedene Wasserverbraucher versorgt werden können.

In jede der Abführleitungen 12, 13, 14 ist ein Magnetventil 15, 16, 17 eingesetzt, das als Steuergerät für die Freigabe der entsprechenden Abführleitung dient. Jedes der Magnetventile 15, 16, 17 ist zu diesem Zweck über elektrische Anschlussleitungen 18, 19, und 20 mit einer gemeinsamen Verteilerleiste 21 verbunden, die fest innerhalb des Schachtgehäuses 1 angeordnet und mit den verschiedenen Adern eines vieladrigen Steuerkabels 22 verbunden ist. Dieses Steuerkabel 22 wird, wie die Fig. 2 und 3 zeigen, über eine Dichttülle 23 durch die Seitenwand 4 in das Schachtgehäuse 1 eingeführt und in der in Fig. 2 strichpunktiert angedeuteten Weise durch einen gehäusefesten Bereich, an dem auch die Verteilerleiste 21 sitzt, der Verteilerleiste zugeführt.

Die Fig. 3 lässt in diesem Zusammenhang erkennen, dass von der Wassersammelleitung 8 aus leistenartige Wände 24 und 25 nach oben gezogen sind, auf deren oberen Rand ein Topfverschluss 26 mit seinen unteren Rändern aufgesetzt ist. Der Topfverschluss 26 ist luft- und wasserdicht ausgebildet und an seinem unteren Rand wenigstens abschnittsweise mit einer elastischen Leiste 27, beispielsweise aus Schaumgummi versehen, die beim Ausführungsbeispiel insbesondere die Aufgabe hat, die einzelnen Anschlussleitungen 18, 19, 20, die von der Verteilerleiste 21 zu den zugeordneten Magnetventilen 15, 16, 17 verlaufen, zwischen dem unteren Rand des Topfverschlusses 26 und dem oberen Rand der Leisten 24 einzuklemmen und auf diese Weise zu fixieren. Der Topfverschluss 26 wird in nicht näher gezeigter Weise in seiner Verschlussstellung gehalten. Die Leisten 24, 25, ein Träger 28 für die Verteilerleiste 21 und die Wassersammelleitung 8 sind, wie insbesondere Fig. 3 erkennen lässt, einstückig mit dem Schachtgehäuse 1 hergestellt, das beispielsweise aus Kunststoff gefertigt sein kann. Natürlich wäre es auch möglich, die Wassersammelleitung 8 als getrenntes Bauteil, beispielsweise aus einem nicht rostenden Metall herzustellen und sie dann mit dem Schachtgehäuse 1 zu verbinden. Das einstückig ausgebildete Gehäuse weist aber gewisse Vorteile im Hinblick auf den Herstellungsaufwand auf.

Wie die Fig. 2 deutlich macht, bei der ein Durchblick durch die geschlossene Oberseite des Topfverschlusses 26 zeichnerisch ermöglicht ist, sind auf der Verteilerleiste 21 verschiedene Kontaktstellen 29, 30, 31 jeweils paarweise einander zugeordnet, die von unten her mit den entsprechenden Adern des Steuerkabels 22 bestückt und mit diesen verbunden sind. Die Anschlussleitungen 19, 20 und 18 werden daher auf die entsprechenden Kontaktstellen aufgelegt und mit den zugeordneten Magnetventilen 15 bis 17 verbunden, wonach der Topfverschluss 26 aufgesetzt und dadurch die Anschlusskabel in ihrer Lage gesichert werden. Der Topfverschluss weist dabei den Vorteil auf, dass selbst dann, wenn in unerwünschter Weise Wasser in das Schachtgehäuse 1 eindringen und über das Niveau der Anschlussleitungen 12, 13, 14 nach oben ansteigen sollte, die elektrischen Anschlüsse an der Verteilerleiste 21 vor einer Wasserberührung gesichert bleiben, weil das innerhalb des Topfverschlusses 26 befindliche Luftvolumen wegen des dichten Topfverschlusses nicht entweichen kann und daher innerhalb des Topfverschlusses gefangen bleibt. Wasser kann dann zwar auch unter dem unteren Rand des Topfverschlusses durchtreten, steigt aber im Topfverschluss nicht höher. Ein Ausfall der elektrischen Versorgung durch Kurzschluss an der Verteilerleiste ist daher nahezu vollkommen ausgeschlossen.

Die Fig. 2 und 3 machen überdies deutlich, dass innerhalb des Schachtgehäuses 1 eine übersichtliche Anordnung der abzweigenden Leitungen vorliegt und dass die zusätzliche Anordnung der Verteilerleiste 21 innerhalb des Raumes des Schachtgehäuses 1 keinen Platz in Anspruch nimmt, der einen Zugriff von oben behindert. Die Verteilerleiste 21 und ihr Topfverschluss 26 liegen nämlich senkrecht oberhalb der Wassersammelleitung 8 und ihre Abmessungen sind auch so gewählt, dass der Topfverschluss 26 und die innenliegende Verteilerleiste 21 noch innerhalb der von der Befestigungsleiste 24 senkrecht nach oben erfolgenden Projektionsgrenze liegen. Die Anordnung der wasserführenden Leitungen 8 und 12 bis 14 und der elektrischen Steuerung innerhalb des Schachtgehäuses 1 ist daher sehr platzsparend und übersichtlich und daher bei der Montage auch gut handhabbar.

Die Verteilerleiste kann bei abgenommenem Topfverschluss vorteilhafterweise aus dem Schachtgehäuse entnommen werden, so dass die elektrischen Anschlüsse der einzelnen Kabel bequemer außerhalb des Schachtes hergestellt oder gelöst werden können.

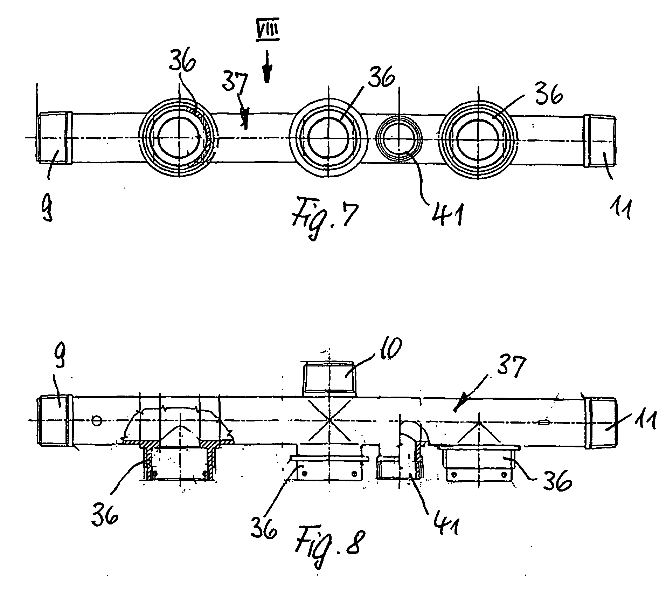

Die Fig. 4 bis 8 zeigen eine Variante des Schachtgehäuses 100, das hier im Gegensatz zu der Ausführungsform der Fig. 1 bis 3 nicht auf seiner Innenseite mit einer einstückig angesetzten Sammelleitung 8 versehen ist.

Wie die Fig. 4 und 6 zeigen, ist die rückwärtige Gehäusewand 50 des Schachtgehäuses 100 im Bereich unterhalb ihrer Mitte nach innen abgeknickt und geht in einen versetzten Wandteil 50a über, der mit Öffnungen 35 zur Durchführung von Anschlussstutzen 36 versehen ist, die einstückig an einer Sammelleitung angebracht sind, die als ein separates Rohrstück 37 ausgebildet und in den Fig. 7 und 8 dargestellt ist. Dieses Rohrstück 37 wird dabei, wie Fig. 4 zeigt, mit Hilfe der Anschlussstutzen 36 über Steckbügel 38 mit den Anschlüssen 12 bzw. 13, der auch schon in den Fig. 1 bis 3 gezeigten Ventile 15 und 16 verbunden, die wiederum über ihre weiterführende Verbindungsstutzen 12a, 13a mit nicht gezeigten Leitungen verbindbar sind, die zu Bewässerungseinrichtungen führen.

Das Rohrstück 37 ist, wenn es am Schachtgehäuse 100 montiert ist, unterhalb der abknickenden Querwand 50b der rückwärtigen Schachtwand 50 angeordnet und überragt so das Schachtgehäuse nahezu nicht, was den Einbau erleichtert. Der Wandteil 50b wird bei diesem Ausführungsbeispiel dazu ausgenützt, um Befestigungsstege 39 zu halten die, wie auch schon beim Ausführungsbeispiel der Fig. 1 bis 3, zur Anordnung einer - nicht gezeigten - Verteilerleiste 21 für die Stromzuführungen dienen und von einer Schutzkappe 26 überdeckt sind. Im übrigen sind gleiche Teile wie beim Ausführungsbeispiel der Fig. 1 bis 3 auch mit gleichen Bezugszeichen versehen. Fig. 5 weist nur zwei Ventile 15 und 16 auf. Der dritte Anschlussstutzen 36 wird hier durch einen Blinddeckel 40 geschlossen.

Auch bei diesem Ausführungsbeispiel ist die Schutzkappe bzw. der Topfverschluss 26 an ihrem unteren Rand mit einer elastischen Klemmleiste 27 versehen, so dass hierdurch auch die Klemmmittel für die Halterung der nicht näher gezeigten Anschlussleitungen 18, 19, 20 zur Verfügung gestellt werden.

Die Fig. 7 und 8 lassen schließlich erkennen, dass das Rohrstück 37, wie auch die Sammelleitung 8 der Ausführungsform nach den Fig. 1 bis 3 mit drei externen Anschlüssen 9 und 11 versehen ist, über die es möglich ist, eine Wasserleitung anzuschließen. Das Rohrstück 37 weist aber auf der Seite der drei im gleichen Abstand angeordneten Anschlussstutzen 36 auch noch einen weiteren Anschluss 41 auf, der normalerweise durch einen Blindstopfen verschlossen ist. Die Rückwand 50 des Schachtgehäuses besitzt daher auch eine entsprechende Durchführöffnung für diesen Anschlussstutzen 41, der dazu dient, das Leitungsnetzwerk zu entwässern und zu belüften, wenn beispielsweise zu Beginn der Winterperiode dieses Leitungssystem geleert werden muss.

Es genügt zu diesem Zweck, den entsprechend aufgeschraubten Verschlussstopfen vom Anschlussstutzen 41 zu lösen, so dass das im Rohrstück 37 und in den angrenzenden und angeschlossenen Leitungen befindliche Wasser in das Innere des Schachtes austreten und dann durch die am tiefsten Punkt des Schachtbodens 70 vorgesehene Öffnung 70a, die normalerweise nach dem Einbau offen ist, nach unten in das Erdreich versickern kann. Da auch bei dem Ausführungsbeispiel der Fig. 4 bis 8 die elektrischen Anschlussteile, wie beim Ausführungsbeispiel der Fig. 1 bis 3, wasserdicht abgeschlossen sind, entstehen durch das Volllaufen des Schachtgehäuses keine Nachteile.

## Patentansprüche

1. Versenkbarer Schacht, insbesondere für eine Bewässerungsanlage, mit In einem Schachtgehäuse (1, 100) angeordneten Zu- und Abführleitungen (8, 12, 13, 14, 37), für die Wasserversorgung, mit diesen zugeordneten elektrisch betätigbaren Steuergeräten, insbesondere Magnetventilen (15, 16, 17) und mit elektrischen Anschlussleitungen (18, 19, 20) für diese Steuergeräte, wobei eine elektrische Verteilerleiste (21) vorgesehen ist, die mit den Adern eines in das Schachtgehäuse (1) eingeführten Kabels (22) verbunden und mit den Anschlussleitungen (18, 19, 20) zu den Steuergeräten (15, 16, 17) belegbar ist und die oberhalb einer Wassersammelleitung (8, 37) angeordnet ist, die als gemeinsame Zuführleitung (8, 37) für alle Abführleitungen (12, 13, 14) dient und einen externen Anschluss aufweist, **dadurch gekennzeichnet, dass** die Wassersammelleitung (37) außerhalb des Schachtgehäuses (100) an dessen Wand (50) geführt ist und die Wand (50) mit einer Vertiefung für die Sammelleitung (37) versehen ist.

2. Schacht nach Anspruch 1, **dadurch gekennzeichnet, dass** die Wassersammelleitung (8) als eine parallel zu und angrenzend an einer Gehäusewand (5) des Schachtgehäuses (1) verlaufende Versorgungsleiste ausgebildet ist.

3. Schacht nach Anspruch 2, **dadurch gekennzeichnet, dass** die als Versorgungsleiste ausgebildete Wassersammelleitung (8) einstückig in das Schachtgehäuse (1) integriert ist.

4. Schacht nach Anspruch 1, **dadurch gekennzeichnet, dass** alle Abführleitungen (12, 13, 14) im wesentlichen rechtwinklig und horizontal von der Wassersammelleitung (8, 37) abgehen.

5. Schacht nach Anspruch 2, **dadurch gekennzeichnet, dass** die Wassersammelleitung (8, 37) mit externen Anschlüssen (9, 11) an beiden Enden und/oder mit einem externen Anschluss (10) im Bereich der Gehäusewand (5, 50) versehen ist.

6. Schacht nach Anspruch 3, **dadurch gekennzeichnet, dass** die elektrische Verteilerleiste (21) die senkrecht nach oben gezogene Projektionsgrenzlinien der Wasserversorgungsleitung (8) nicht wesentlich überragt.

7. Schacht nach Anspruch 1, **dadurch gekennzeichnet, dass** die Verteilerleiste (21) durch einen übergestülpten Topfverschluss (26) nach oben abgedeckt ist, der luft- und wasserdicht ist.

8. Schacht nach Anspruch 7, **dadurch gekennzeichnet, dass** der Topfverschluss (26) mit seinem unteren Rand auf von der Wasserversorgungsleitung (8) aus senkrecht aufragenden Wänden (24, 25) aufsitzt.

9. Schacht nach Anspruch 8, **dadurch gekennzeichnet, dass** der untere Rand des Topfverschlusses (26) wenigstens abschnittsweise mit einer elastischen Klemmleiste (27) versehen ist, die als Klemmmittel für die Halterung der Anschlussleitungen (18, 19, 20) dient.

10. Schacht nach Anspruch 7, **dadurch gekennzeichnet, dass** das Kabel (22) über Dichttüllen (23) in das Schachtgehäuse (1, 100) und in den oberhalb der Wasserversorgungsleitung (8, 37), aber noch unterhalb des Topfverschlusses (26) liegenden Raum geführt ist, um die Verteilerleiste (21) mit den einzelnen Adern zu bestücken.

11. Schacht nach Anspruch 1, **dadurch gekennzeichnet, dass** die Wassersammelleitung als separates Rohrstück (37) ausgebildet und außerhalb der Wand (50) des Schachtes (100) gehalten ist.

12. Schacht nach Anspruch 11, **dadurch gekennzeichnet, dass** das Rohrstück (37) mit den Anschlüssen (36) für die Abführleitungen (12, 13, 14) durch Öffnungen (35) der Wand (50) hindurchgeführt und mit diesen Anschlüssen (36) an der Wand (50) befestigt ist

13. Schacht nach Anspruch 12, **dadurch gekennzeichnet, dass** das Rohrstück (37) eine zusätzliche Abzweigung in der Form eines Anschlusses (41) aufweist, der in das Schachtinnere hereinragt und zur Entwässerung des Wasserversorgungsnetzes in das Schachtinnere herein dient.

## Claims

1. Buriable shaft, particularly for a watering system, with feed and drainage pipes (8, 12, 13, 14, 37) for the water supply located in a shaft casing (1, 100), electrically operable control devices, particularly solenoid valves (15, 16, 17) associated with said pipes and with electrically connecting leads (18, 19, 20) for said control devices, an electrical distributing link (21) being provided which is connected to the conductors of a cable (22) inserted in the shaft casing (1) and occupiable with the connecting leads (18, 19, 20) to the control devices (15, 16, 17) and which is positioned above a water collecting pipe (8, 37), which serves as the common feed pipe (8, 37) for all the drainage pipes (12, 13, 14) and which has an external connection, **characterized in that** the water collecting pipe (37) is guided on the wall (50) of the shaft casing (100) outside the latter and the wall (50) is provided with a depression for the collecting pipe (37).

2. Shaft according to claim 1, **characterized in that** the water collecting pipe (8) is constructed as a supply link running parallel and adjacent to a wall (5) of the shaft casing (1).

3. Shaft according to claim 2, **characterized in that** the water collecting pipe (8) constructed as a supply link is integrated integrally into the shaft casing (1).

4. Shaft according to claim 1, **characterized in that** all the drainage pipes (12, 13, 14) emanate from the water collecting pipe (8, 37) horizontally and substantially at right angles.

5. Shaft according to claim 2, **characterized in that** the water collecting pipe (8, 37) is provided with external connections (9, 11) at both ends and/or with an external connection (10) in the vicinity of the casing wall (5, 50).

6. Shaft according to claim 3, **characterized in that** the electrical distributing link (21) does not significantly project over the vertically upwardly drawn protection border lines of the water collecting pipe (8).

7. Shaft according to claim 1, **characterized in that** the distributing link (21) is upwardly covered by an airtight and watertight, slipped over cup-like closure (26).

8. Shaft according to claim 7, **characterized in that** the lower edge of the cup-like closure (26) rests on walls (24, 25) projecting vertically from the water collecting pipe (8).

9. Shaft according to claim 8, **characterized in that** the lower edge of the cup-like closure (26) is at least zonally provided with an elastic clamping strip (27) serving as clamping means for holding the connecting leads (18, 19, 20).

10. Shaft according to claim 7, **characterized in that**, via sealing bushes (23), the cable (22) is led into the shaft casing (1, 100) and into the area above the water collecting pipe (8, 37), but still below the cup-like closure (26) in order to equip the distributing link (21) with the individual conductors.

11. Shaft according to claim 1, **characterized in that** the water collecting pipe is constructed as a separate pipe section (37) and is held outside the wall (50) of shaft (100).

12. Shaft according to claim 11, **characterized in that** the pipe section (37) with the connections (36) for the drainage pipes (12, 13, 14) is passed through openings (35) of wall (50) and with said connections (36) is fixed to the wall (30).

13. Shaft according to claim 12, **characterized in that** the pipe section (37) has an additional branch in the form of a connection (41), which projects into the shaft interior and is used for draining the water supply system.

## Revendications

1. Puits enfouissable, en particulier pour une installation d'irrigation, avec des conduites d'amenée et d'évacuation (8, 12, 13, 14, 37) pour l'alimentation en eau disposées dans une cage de puits (1, 100), avec des appareils de commande électriquement actionnables, notamment électrovannes (15, 16, 17), affectés à celles-ci, et avec des lignes de raccordement électriques (18, 19, 20) pour lesdits appareils de commande, une réglette de distribution (21) étant prévue, laquelle est reliée aux brins d'un câble (22) inséré dans la cage de puits (1), est attribuable aux appareils de commande (15, 16, 17) par les lignes de raccordement (18, 19, 20) et est disposée au-dessus d'une conduite collectrice d'eau (8, 37) ayant fonction de conduite d'amenée (8, 37) commune à toutes les conduites d'évacuation (12, 13, 14) et présentant un raccord externe, **caractérisé en ce que** la conduite collectrice d'eau (37) passe contre la paroi (50) de la cage de puits (100) à l'extérieur de celle-ci, et **en ce que** la paroi (50) est pourvue d'un évidement pour la conduite collectrice (37).

2. Puits selon la revendication 1, **caractérisé en ce que** la conduite collectrice d'eau (8) est formée en tant que réglette d'alimentation parallèle et contiguë à une paroi de cage (5) de la cage de puits (1).

3. Puits selon la revendication 2, **caractérisé en ce que** la conduite collectrice d'eau (8) formée en tant que réglette d'alimentation est intégrée en une seule pièce à la cage de puits (1).

4. Puits selon la revendication 1, **caractérisé en ce que** toutes les conduites d'évacuation (12, 13, 14) partent essentiellement à angle droit et horizontalement de la conduite collectrice d'eau (8, 37).

5. Puits selon la revendication 2, **caractérisé en ce que** la conduite collectrice d'eau (8, 37) est pourvue de raccords externes (9, 11) à ses deux extrémités et/ou d'un raccord externe (10) au niveau de la paroi de cage (5, 50).

6. Puits selon la revendication 3, **caractérisé en ce que** la réglette électrique de distribution (21) ne dépasse pas sensiblement les limites de la projection orthogonale au sommet de la conduite d'alimentation en eau (8).

7. Puits selon la revendication 1, **caractérisé en ce que** le haut de la réglette de distribution (21) est recouvert par un joint en coupelle (26) retournée, étanche à l'air et à l'eau.

8. Puits selon la revendication 7, **caractérisé en ce que** le joint en coupelle (26) repose par son bord inférieur sur des parois (24, 25) s'élevant verticalement de la conduite d'alimentation en eau (8).

9. Puits selon la revendication 8, **caractérisé en ce que** le bord inférieur du joint en coupelle (26) est muni au moins partiellement d'une réglette de bornes (27) élastique ayant fonction de moyen de serrage pour le maintien des lignes de raccordement (18, 19, 20).

10. Puits selon la revendication 7, **caractérisé en ce que** le câble (22) est conduit par des passe-câbles (23) dans la cage de puits (1, 100) et dans l'espace existant au-dessus de la conduite d'alimentation en eau (8, 37) mais aussi au-dessous du joint en coupelle (26), pour garnir la réglette de distribution (21) avec les différents brins.

11. Puits selon la revendication 1, **caractérisé en ce que** la conduite collectrice d'eau est formée en tant que tronçon séparé (37), et maintenue à l'extérieur de la paroi (50) de la cage (100).

12. Puits selon la revendication 11, **caractérisé en ce que** le tronçon (37) est conduit avec les raccords (36) pour les conduites d'évacuation (12, 13, 14) par des ouvertures (35) de la paroi (50), et est fixé contre la paroi (50) avec lesdits raccords (36).

13. Puits selon la revendication 12, **caractérisé en ce que** le tronçon (37) présente une dérivation additionnelle sous la forme d'un raccord (41) pénétrant à l'intérieur du puits et servant au drainage du réseau d'alimentation en eau à l'intérieur du puits.
